Europäisches Patentamt

European Patent Office

Office européen des brevets

(19)

(11) **EP 1 312 783 A1**

(12) **EUROPÄISCHE PATENTANMELDUNG**

(43) Veröffentlichungstag:
**21.05.2003 Patentblatt 2003/21**

(51) Int Cl.⁷: **F02D 41/14**, F02D 41/04

(21) Anmeldenummer: **01123881.3**

(22) Anmeldetag: **05.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Robert Bosch GmbH**
**70442 Stuttgart (DE)**

(72) Erfinder:
• **Wild, Ernst**
**71739 Oberriexingen (DE)**

• **Drung, Michael**
**75417 Muehlacker (DE)**

(74) Vertreter: **Schäfer, Wolfgang, Dipl.-Ing.**
**Dreiss, Fuhlendorf, Steimle & Becker**
**Postfach 10 37 62**
**70032 Stuttgart (DE)**

Bemerkungen:
Geänderte Patentansprüche gemäss Regel 86 (2) EPÜ.

(54) **Verfahren zum Betreiben einer Brennkraftmaschine**

(57) Es wird ein Verfahren zum Betreiben einer Brennkraftmaschine (10) insbesondere eines Kraftfahrzeugs beschrieben. Dabei wird Luft über eine Drosselklappe (12) einem Ansaugrohr (11) zugeführt. Es wird Abgas über eine Abgasrückführung (13) dem Ansaugrohr (11) zugeführt, wobei das Abgas eine Abgastemperatur (Tagrsr) aufweist. Weiterhin wird das entstehende Gasgemisch einem Brennraum zugeführt, wobei das Gasgemisch eine Gasgemischtemperatur (Tasrm) aufweist. Die Gasgemischtemperatur (Tasrm) wird in Abhängigkeit von der Abgastemperatur (Tagrsr) ermittelt. Bei der Ermittlung der Gasgemischtemperatur (Tasrm) werden die wärmespeichernden Eigenschaften der Wand des Ansaugrohrs (11) berücksichtigt.

FIG. 1

EP 1 312 783 A1

**Beschreibung**

Stand der Technik

Die Erfindung geht aus von einem Verfahren zum Betreiben einer Brennkraftmaschine insbesondere eines Kraftfahrzeugs, bei dem Luft über eine Drosselklappe einem Ansaugrohr zugeführt wird, bei dem Abgas über eine Abgasrückführung dem Ansaugrohr zugeführt wird und dabei eine Abgastemperatur aufweist, bei dem das entstehende Gasgemisch einem Brennraum zugeführt wird und dabei eine Gasgemischtemperatur aufweist, und bei dem die Gasgemischtemperatur in Abhängigkeit von der Abgastemperatur ermittelt wird. Die Erfindung betrifft ebenfalls ein entsprechendes Steuergerät für eine Brennkraftmaschine sowie eine entsprechende Brennkraftmaschine. Weiterhin betrifft die Erfindung ein entsprechendes Computerprogramm sowie einen entsprechenden Datenträger, mit deren Hilfe die Ausführung des erfindungsgemäßen Verfahrens durchführbar ist.

Aus der DE 197 39 901 A1 ist ein Verfahren zur Steuerung einer mit einer Abgasrückführung versehenen Brennkraftmaschine bekannt. Diese Steuerung wird dort in Abhängigkeit von der Temperatur des rückgeführten Abgases, der angesaugten Luft sowie einer mittleren Temperatur des Ansaugrohrs durchgeführt. Letztgenannte mittlere Temperatur des Ansaugrohrs wird dabei unter anderem in Abhängigkeit von der Motortemperatur und der Temperatur der angesaugten Luft ermittelt und mit Hilfe eines Tiefpasses gemittelt. Die Mittelung wird vorgenommen, um insbesondere die aufgrund der sich andauernd ändernden Abgasrückführrate entstehenden Temperaturveränderungen in dem Ansaugrohr auszugleichen.

Aufgabe und Vorteile der Erfindung

Aufgabe der Erfindung ist es, ein Verfahren zum Betreiben einer Brennkraftmaschine insbesondere eines Kraftfahrzeugs zu schaffen, das die Temperaturveränderungen, die unter anderem aufgrund der Abgasrückführung in dem Ansaugrohr entstehen, genauer berücksichtigt.

Diese Aufgabe wird bei einem Verfahren der eingangs genannten Art erfindungsgemäß dadurch gelöst, daß bei der Ermittlung der Gasgemischtemperatur die wärmespeichernden Eigenschaften der Wand des Ansaugrohrs berücksichtigt werden. Die Aufgabe wird ebenfalls bei einem Steuergerät und einer Brennkraftmaschine der eingangs genannten Art entsprechend gelöst.

Erfindungsgemäß werden die wärmespeichernden Eigenschaften der Wand des Ansaugrohrs bei der Stuerung und/oder Regelung der Brennkraftmaschine berücksichtigt. Dies bedeutet, daß keine Mittelung der Temperatur des Ansaugrohr vorgenommen wird, sondern daß die dem Ansaugrohr aufgrund der sich andauernd ändernden Abgasrückführrate zu- und abfließenden Wärmeströme laufend ermittelt werden. Daraus werden dann die resultierenden Temperaturveränderungen des Ansaugrohr ebenfalls laufend ermittelt. Insgesamt wird somit das wärmespeichernde Verhalten des Ansaugrohrs modelliert, um aus dieser Modellierung insbesondere die Temperatur des Gasgemischs in dem Ansaugrohr laufend zu ermitteln.

Von besonderer Bedeutung ist die Realisierung des erfindungsgemäßen Verfahrens in der Form eines Computerprogramms, das für eine Brennkraftmaschine insbesondere eines Kraftfahrzeugs vorgesehen ist. Das Computerprogramm weist eine Abfolge von Befehlen auf, die dazu geeignet sind, das erfindungsgemäße Verfahren durchzuführen, wenn sie auf einem Computer ausgeführt werden.

Weiterhin kann die Abfolge von Befehlen auf einem computerlesbaren Datenträger gespeichert sein, beispielsweise auf einer Diskette, einer Compact-Disc (sogenannte CD), einem sogenannten Flash-Memory, oder dergleichen.

Das Computerprogramm kann gegebenenfalls zusammen mit anderen Computerprogrammen als Software-Produkt beispielsweise an einen Hersteller von Steuergeräten für Brennkraftmaschinen vertrieben werden. Die Übermittlung des Software-Produkts kann dabei durch die Übersendung einer Diskette oder einer CD erfolgen, deren Inhalt der Steuergeräte-Hersteller dann auf das Steuergerät überträgt. Ebenfalls ist es möglich, daß ein Flash-Memory an den Steuergeräte-Hersteller versandt wird, den dieser direkt in das Steuergerät einsetzt. Ebenfalls ist es möglich, daß das Software-Produkt über ein elektronisches Kommunikationsnetzwerk, insbesondere über das Internet, an den Steuergeräte-Hersteller übermittelt wird. In diesem Fall stellt das Software-Produkt als solches - also unabhängig von einem elektronischen Speichermedium - das Vertriebsprodukt dar. Der Steuergeräte-Hersteller lädt in diesem Fall das Software-Produkt z.B. aus dem Internet herunter, um es danach beispielsweise auf einem Flash-Memory abzuspeichern und in das Steuergerät einzusetzen.

Das Computerprogramm kann auch als separates Software-Modul vertrieben werden, das auf die vorstehend beschriebenen Möglichkeiten an den Steuergeräte-Hersteller geliefert wird, und das dann von diesem gegebenenfalls zusammen mit weiteren, kompatiblen Software-Modulen von anderen Herstellern in das Steuergerät übernommen wird.

In allen diesen Fällen wird die Erfindung durch das Computerprogramm realisiert, so daß dieses Computerprogramm in gleicher Weise die Erfindung darstellt wie das Verfahren, zu dessen Ausführung das Computerprogramm geeignet ist. Dies gilt dabei unabhängig davon, ob das Computerprogramm auf einem Speichermedium abgespeichert ist, oder ob es als solches - also unabhängig von einem Speichermedium - vorhanden ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Ausführungsbeispiele der Erfindung

Figur 1   zeigt eine schematische Darstellung eines Ausführungsbeispiels einer erfindungsgemäßen Brennkraftmaschine, und

Figur 2   zeigt ein schematisches Blockschaltbild eines Ausführungsbeispiels eines erfindungsgemäßen Verfahrens zum Betreiben der Brennkraftmaschine der Figur 1.

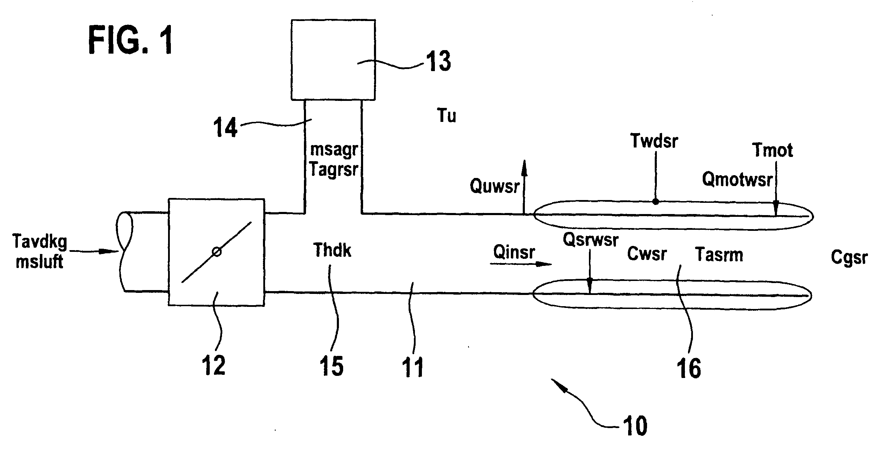

In der Figur 1 ist ein Ausschnitt aus einer Brennkraftmaschine 10 eines Kraftfahrzeugs dargestellt. Bei der Brennkraftmaschine 10 kann es sich um eine direkteinspritzende Brennkraftmaschine oder auch um eine Brennkraftmaschine mit Saugrohreinspritzung handeln.

Die Brennkraftmaschine 10 weist ein Ansaugrohr 11 auf, in dem eine Drosselklappe 12 untergebracht ist. In der Figur 1 wird das Ansaugrohr 11 in einer von links nach rechts führenden Ansaugrichtung durchströmt.

Weiterhin ist in der Figur 1 eine Abgasrückführung 13 vorgesehen, die vereinfacht als Block dargestellt ist. Diese Abgasrückführung 13 ist mit einem Rückführrohr 14 versehen, das zu dem Ansaugrohr 11 geführt ist, und das in einem Bereich 15 in Ansaugrichtung nach der Drosselklappe 12 mit dem Ansaugrohr 11 verbunden ist. An das Ansaugrohr 11 schließt sich in nichtdargestellter Weise ein Zylinder mit einem Brennraum der Brennkraftmaschine 10 an. In Ansaugrichtung vor diesem Brennraum befindet sich ein Bereich 16 des Ansaugrohrs 11.

Über die Drosselklappe 12 wird Luft aus der Umgebung der Brennkraftmaschine 10 angesaugt. Über das Rückführrohr 14 wird Abgas von der Abgasanlage der Brennkraftmaschine 10 rückgeführt und ebenfalls angesaugt. In dem Bereich 15 werden die Luft und das Abgas vermischt, so daß das Ansaugrohr 11 danach von einem Gasgemisch in Ansaugrichtung durchströmt wird.

Die vor der Drosselklappe 12 angesaugte Luft besitzt die Lufttemperatur Tavdkg und den Massenstrom msluft. Das über das Rückführrohr 14 zugeführte Abgas besitzt die Abgastemperatur Tagrsr und den Massenstrom msagr. Im Bereich 15 der Zusammenführung des Rückführrohres 14 in das Ansaugrohr 11 werden diese beiden Gase gemischt. Es entsteht ein in das Ansaugrohr 11 weiter einströmendes Gasgemisch mit einer Einströmtemperatur Thdk.

Die Einströmtemperatur Thdk wird nach einer Mischungsregel wie folgt ermittelt:

$$Thdk=(Tavdkg*msluft+Tagrsr*msagr):(msluft+msagr)$$

nachfolgend als Gleichung G1 bezeichnet.

Das Gasgemisch, das sich im Ansaugrohr 11 hinter der Drosselklappe 12 und hinter dem Bereich 15 in dem Bereich 16 befindet, besitzt die Gasgemischtemperatur Tasrm und die Wärmekapazität Cwsr. Aus der Differenz der Einströmtemperatur Thdk und der Gasgemischtemperatur Tasrm resultiert ein Wärmestrom Qinsr, der von dem in den Bereich 15 einströmenden Gasgemisch ausgeht und in das in dem Bereich 16 befindliche Gasgemisch einfließt.

Bei einem Wärmeübergangswiderstand Rzs zwischen den verschiedenen Gasgemischen wird der Wärmestrom Qinsr wie folgt ermittelt:

$$Qinsr=(Thdk-Tasrm):Rzs$$

nachfolgend als Gleichung G2 bezeichnet.

Die Wand des Ansaugrohrs 11 besitzt eine Wandtemperatur Twdsr. Aus der Differenz der Gasgemischtemperatur Tasrm und der Wandtemperatur Twdsr resultiert ein Wärmestrom Qsrwsr, der von dem Gasgemisch, das sich im Ansaugrohr 11 in dem Bereich 16 befindet, ausgeht, und der in die Wand des Ansaugrohrs 11 einfließt.

Bei einem Wärmeübergangswiderstand Rsw zwischen dem Gasgemisch im Bereich 16 des Ansaugrohrs 11 und der Wand des Ansaugrohrs 11 wird der Wärmestrom Qsrwsr wie folgt ermittelt:

$$Qsrwsr=(Tasrm-Twdsr):Rsw$$

nachfolgend als Gleichung G3 bezeichnet.

In Ansaugrichtung rechts von dem Bereich 16 ist das Ansaugrohr 11 - wie erwähnt - mit einem Brennraum der Brennkraftmaschine 10 verbunden. In dem Brennraum findet die Verbrennung des mit Kraftstoff angereicherten Gasgemisches statt. Dieses Gasgemisch besitzt in dem Brennraum die Wärmekapazität Cgsr.

Insbesondere die Zylinder der Brennkraftmaschine 10 werden mit einer Flüssigkeit gekühlt, die eine Kühlwassertemperatur Tmot besitzt, die üblicherweise auch als Motortemperatur herangezogen wird. Aus der Differenz der Kühlwassertemperatur Tmot und der Wandtemperatur Twdsr resultiert ein Wärmestrom Qmotwsr, der von dem Zylinder der Brennkraftmaschine 10 ausgeht und in die Wand des Ansaugrohrs 11 einfließt.

Bei einem Wärmeübergangswiderstand Rkw zwischen dem bzw. den Zylindern der Brennkraftmaschine 10 und der Wand des Ansaugrohrs 11 wird der Wärmestrom Qmotwsr wie folgt ermittelt:

$$Qmotwsr=(Tmot-Twdsr):Rkw$$

nachfolgend als Gleichung G4 bezeichnet.

Die Umgebung des Ansaugrohrs 11 besitzt eine Umgebungstemperatur Tu. Aus der Differenz der Wandtemperatur Twdsr und der Umgebungstemperatur Tu resultiert ein Wäremstrom Quwsr, der von der Wand des Ansaugrohrs 11 ausgeht und in die Umgebung desselben abfließt.

Bei einem Wärmeübergangswiderstand Rwu zwischen der Wand des Ansaugrohrs 11 und der Umgebung desselben wird der Wärmestrom Quwsr wie folgt ermittelt:

$$Quwsr=(Twdsr-Tu):Rwu$$

nachfolgend als Gleichung G5 bezeichnet.

Die Differenz aus dem Wärmestrom Qinsr einerseits, der in das Gasgemisch einfließt, das sich in dem Bereich 16 des Ansaugrohrs 11 befindet, und dem Wärmestrom Qsrwsr andererseits, der in die Wand des Ansaugrohrs 11 abfließt, bestimmt die Wärmekapazität Cgsr des Gasgemisches, das sich in dem Bereich 16 befindet. Daraus resultiert gleichzeitig eine Erhöhung oder Verminderung der Gasgemischtemperatur Tasrm in dem Bereich 16.

Dies kann wie folgt ausgedrückt werden:

$$Tasrm-Twdsr=\int(Qinsr-Qsrwsr)dt:Cgsr$$

nachfolgend als Gleichung G6 bezeichnet.

Die Differenz aus der Summe der in die Wand einfließenden Wärmeströme Qsrwsr und Qmotwsr einerseits und dem aus der Wand abfließenden Wärmestrom Quwsr andererseits bestimmt die Wärmekapazität Cwsr des Gasgemisches in dem Bereich 16 des Ansaugrohrs 11. Daraus resultiert gleichzeitig eine Erhöhung oder Verminderung der Wandtemperatur Twdsr.

Dies kann wie folgt ausgedrückt werden:

$$Twdsr-Tu=\int(Qmotwsr+Qsrwsr-Quwsr)dt:Cwsr$$

nachfolgend als Gleichung G7 bezeichnet.

Insbesondere durch die Wärmeströme Qsrwsr, Qmotwsr, Quwsr, die der Wand des Ansaugrohrs 11 zufließen bzw. von dieser abfließen, sowie durch deren Verknüpfungen gemäß der Gleichung G7 werden die wärmespeichernden Eigenschaften dieser Wand des Ansaugrohrs 11 berücksichtigt.

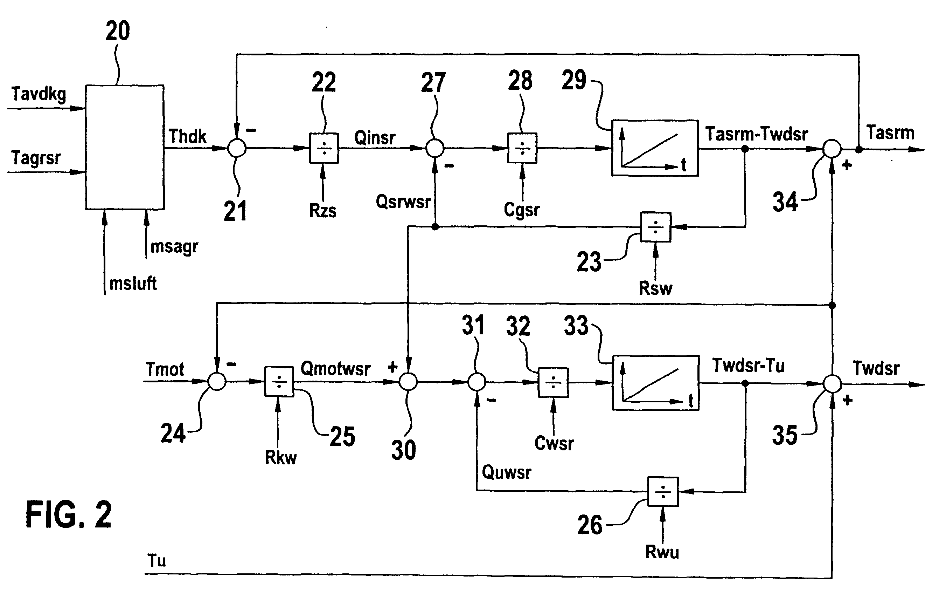

In der Figur 2 sind die vorstehend beschriebenen Zusammenhänge in der Form eines Blockschaltbilds dargestellt. Übereinstimmende Bezeichnungen kennzeichnen dabei übereinstimmende Betriebsgrößen der Brennkraftmaschine 10.

Die Ermittlung der Einströmtemperatur Thdk und damit die Realisierung der Gleichung G1 wird in der Figur 2 mit Hilfe eines Blocks 20 vorgenommen. Auf eine detaillierte Darstellung des Blocks 20 wurde dabei verzichtet.

Die Ermittlung des Wärmestroms Qinsr und damit die Realisierung der Gleichung G2 wird in der Figur 2 mit Hilfe einer Subtraktion 21 und einer Division 22 vorgenommen.

Die Ermittlung des Wärmestroms Qsrwsr und damit die Realisierung der Gleichung G3 wird in der Figur 2 mit Hilfe einer Division 23 vorgenommen.

Die Ermittlung des Wärmestroms Qmotwsr und damit die Realisierung der Gleichung G4 wird in der Figur 2 mit Hilfe einer Subtraktion 24 und einer Division 25 vorgenommen.

Die Ermittlung des Wärmestroms Quwsr und damit die Realisierung der Gleichung G5 wird in der Figur 2 mit Hilfe einer Division 26 vorgenommen.

Die Ermittlung der Differenz der Gasgemischtemperatur Tasrm und der Wandtemperatur Twdsr und damit die Realisierung der Gleichung G6 wird in der Figur 2 mit Hilfe einer Subtraktion 27, einer Division 28 und einer Integration 29 über der Zeit t vorgenommen.

Die Ermittlung der Differenz der Wandtemperatur Twdsr und der Umgebungstemperatur Tu und damit die Realisierung der Gleichung G7 wird in der Figur 2 mit Hilfe einer Addition 30, einer Subtraktion 31, einer Division 32 und einer Integration 33 über der Zeit t vorgenommen.

Mit Hilfe zweier weiterer Additionen 34, 35 werden in der Figur 2 die Ermittlungen der Gasgemischtemperatur Tasrm und der Wandtemperatur Twdsr vorgenommen.

Die anhand der Figur 1 erläuterten Zusammenhänge und das daraus resultierende Blockschaltbild der Figur 2 stellen letztlich ein Verfahren dar, mit dem bestimmte, erwünschte Temperaturen der Brennkraftmaschine 10 modelliert werden können.

In den vorstehenden Erläuterungen spielen die folgenden Temperaturen eine Rolle: die Lufttemperatur Tavdkg, die Abgastemperatur Tagrsr, die Einströmtemperatur Thdk, die Gasgemischtemperatur Tasrm, die Wandtemperatur Twdsr, die Kühlwassertemperatur Tmot und die Umgebungstemperatur Tu.

Wenn man annimmt, daß für die Messung der Lufttemperatur Tavdkg ein Sensor vor der Drosselklappe 12 vorgesehen ist, daß für die Messung der Kühlwassertemperatur Tmot ein Sensor im Bereich der Zylinder der Brennkraftmaschine 10 vorgesehen ist, und daß für die Messung der Umgebungstemperatur ein entsprechender Sensor vorgesehen ist, so ergibt sich daraus die Möglichkeit, alle anderen vorgenannten Temperaturen mit Hilfe der vorstehenden Erläuterungen und insbesondere mit Hilfe der angegebenen Gleichungen zu modellieren. Dabei ist zu beachten, daß es bereits bekannte Verfahren gibt, um die Abgastemperatur Tagrsr aus anderen Betriebsgrößen der Brennkraftmaschine 10 abzuleiten, so daß diese Temperatur insoweit auch als bekannt angenommen werden kann.

Von besonderer Bedeutung sind bei der vorstehenden Möglichkeit die Modellierung der Wandtemperatur Twdsr der Wand des Ansaugrohrs 11 sowie die Modellierung der Gasgemischtemperatur Tasrm, die das Gasgemisch in dem Bereich 16 des Ansaugrohrs 11 aufweist. Gerade bei Brennkraftmaschinen mit Abgasrückführung, wie dies vorliegend der Fall ist, werden diese beiden Temperaturen besonders stark von der Menge des rückgeführten Abgases beeinflußt. Dies würde an sich zu Veränderungen des dem Brennraum der Brennkraftmaschine 10 zugeführten Kraftstoff/Gasgemisches führen, die jedoch mit Hilfe der modellierten Wandtemperatur Twdsr und der modellierten Gasmischtemperatur Tasrm über eine entsprechende Steuerung und/oder Regelung der Betriebsgrößen der Brennkrafmtaschine 10 wieder kompensiert werden können.

Es ist ebenfalls möglich, andere Temperaturen, beispielsweise die Lufttemperatur Tavdkg vor der Drosselklappe 12, in Abhängigkeit von sonstigen gemessenen und/oder modellierten Temperaturen zu modellieren. Dies könnte man - im Vergleich zu der vorbeschriebenen Modellierung der Wandtemperatur Twdsr bzw. Gasgemischtemperatur Tasrm als "Rückwärtsmodellierung" bezeichnen.

Die anhand der Figuren 1 und 2 beschriebenen Verfahren zur Modellierung von Temperaturen können auf verschiedene Arten realisiert werden.

So ist es möglich, das Blockschaltbild der Figur 2 in eine elektronische Hardwareschaltung umzusetzen, in der die vorhandenen Additionen, Subtraktionen, Divisionen und Integrationen mit Hilfe entsprechender Hardwarebausteine realisiert sind, deren Eingänge und Ausgänge in gleicher Weise miteinander verbunden sind, wie dies in der Figur 2 dargestellt ist.

Ebenfalls ist es möglich, das Blockschaltbild der Figur 2 in eine Software umzusetzen. Dies bedeutet, daß ein Computerprogramm mit einer Abfolge von Befehlen vorhanden ist, wobei die Befehle letztlich die Additionen, Subtraktionen, Divisionen und Integrationen sowie deren Verknüpfungen in gleicher Weise durchführen, wie dies in der Figur 2 dargestellt ist.

In beiden Fällen kann ein Steuergerät vorgesehen sein, mit dem die Brennkraftmaschine 10 gesteuert und/oder geregelt wird. In diesem Steuergerät ist dann entweder die Hardwareschaltung oder die Software oder eine Kombination von beidem vorhanden, um die anhand der Figuren 1 und 2 beschriebenen Verfahren zur Modellierung von Temperaturen auszuführen.

Im Falle einer Software ist es möglich, das der Figur 2 entsprechende Computerprogramm ggf. zusammen mit weiteren Computerprogrammen zur Steuerung und/oder Regelung der Brennkraftmaschine 10 auf einem computerlesbaren Datenträger abzuspeichern. Dabei kann es sich um eine Diskette, eine Compact-Disc (sogenannte CD), einen sogenannten Flash-Memory oder dergleichen handeln. Die auf dem Datenträger abgespeicherte Software kann dann als Produkt an einen Kunden verkauft werden.

Ebenfalls ist es im Falle einer Software möglich, das der Figur 2 entsprechende Computerprogramm ggf. zusammen mit weiteren Computerprogrammen zur Steuerung und/oder Regelung der Brennkraftmaschine 10 - ohne die Zuhilfenahme eines elektronischen Speichermediums - über ein elektronisches Kommunikationsnetzwerk als Produkt an einen Kunden zu übertragen und auf diese Weise zu verkaufen. Bei dem Kommunikationsnetzwerk kann sich dabei insbesondere um das Internet handeln.

**Patentansprüche**

**1.**   Verfahren zum Betreiben einer Brennkraftmaschine (10) insbesondere eines Kraftfahrzeugs, bei dem Luft über eine Drosselklappe (12) einem Ansaugrohr (11) zugeführt wird, bei dem Abgas über eine Abgasrückführung (13) dem Ansaugrohr (11) zugeführt wird und dabei eine Abgastemperatur (Tagrsr) aufweist, bei dem das entstehende Gasgemisch einem Brennraum zugeführt wird und dabei eine Gasgemischtemperatur (Tasrm) aufweist, und bei dem die Gasgemischtemperatur (Tasrm) in Abhängigkeit von der Abgastemperatur (Tagrsr) ermittelt wird, **dadurch gekennzeichnet, daß** bei der Ermittlung der Gasgemischtemperatur (Tasrm) die wärmespeichernden Eigenschaften der Wand des Ansaugrohrs (11) berücksichtigt werden.

**2.**   Verfahren nach Anspruch 1, **dadurch gekennzeichnet, daß** ein der Wand des Ansaugrohrs (11) zufließender Wärmestrom (Qsrwsr) berücksichtigt wird, der über das in das Ansaugrohr (11) einströmende Gasgemisch zugeführt wird.

**3.**   Verfahren nach einem der Ansprüche 1 oder 2, **dadurch gekennzeichnet, daß** ein der Wand des Ansaugrohrs (11) zufließender Wärmestrom (Qmotwsr) berücksichtigt wird, der von dem Brennraum der Brennkraftmaschine (10) dem Ansaugrohr (11) zugeführt wird.

**4.**   Verfahren nach einem der Ansprüche 1 bis 3, **dadurch gekennzeichnet, daß** ein von der Wand des Ansaugrohrs (11) in die Umgebung abfließender Wärmestrom (Quwsr) berücksichtigt wird.

**5.** Verfahren nach den Ansprüchen 2, 3 und 4, **dadurch gekennzeichnet, daß** die beiden zufließenden Wärmeströme (Qsrwsr, Qmotwsr) addiert und davon der abfließende Wärmestrom (Quwsr) subtrahiert wird.

**6.** Verfahren nach Anspruch 5, **dadurch gekennzeichnet, daß** aus den addierten und subtrahierten Wärmeströmen eine Wandtemperatur (Twdsr) für die Wand des Ansaugrohrs (11) ermittelt wird.

**7.** Verfahren nach Anspruch 6, **dadurch gekennzeichnet, daß** der der Wand des Ansaugrohrs (11) aufgrund des in das Ansaugrohr (11) einströmenden Gasgemischs zufließende Wärmestrom (Qsrwsr) in Abhängigkeit von der Gasgemischtemperatur (Tasrm) und der Wandtemperatur (Twdsr) ermittelt wird.

**8.** Verfahren nach einem der Ansprüche 6 oder 7, **dadurch gekennzeichnet, daß** der der Wand des Ansaugrohrs (11) von dem Brennraum zufließende Wärmestrom (Qmotwsr) in Abhängigkeit von der Gasgemischtemperatur (Tasrm) und einer Motortemperatur (Tmot), insbesondere einer Kühlwassertemperatur ermittelt wird.

**9.** Verfahren nach einem der Ansprüche 6 bis 8, **dadurch gekennzeichnet, daß** der von der Wand des Ansaugrohrs (11) in die Umgebung abfließende Wärmestrom (Quwsr) in Abhängigkeit von der Wandtemperatur (Twdsr) und einer Umgebungstemperatur (Tu) ermittelt wird.

**10.** Verfahren nach einem der vorstehenden Ansprüche, **dadurch gekennzeichnet, daß** ein in das Ansaugrohr (11) aufgrund des einströmenden Gasmisches zufließender Wärmestrom (Qinsr) berücksichtigt wird, daß von diesem Wärmestrom (Qinsr) der zu der Wand des Ansaugrohrs (11) abfließende Wärmestrom (Qsrwsr) subtrahiert wird, und daß daraus die Gasgemischtemperatur (Tasrm) ermittelt wird.

**11.** Verfahren nach Anspruch 10, **dadurch gekennzeichnet, daß** der in das Ansaugrohr (11) aufgrund des einströmenden Gasgemischs zufließende Wärmestrom (Qinsr) in Abhängigkeit von einer Lufttemperatur (Tavdkg) vor der Drosselklappe (12), der Abgastemperatur (Tagrsr) und der Gasgemischtemperatur (Tasrm) ermittelt wird.

**12.** Computerprogramm zur Anwendung in einer Brennkraftmaschine (10) insbesondere eines Kraftfahrzeugs, mit einer Abfolge von Befehlen, die dazu geeignet sind, das Verfahren nach einem der Ansprüche 1 bis 11 durchzuführen, wenn sie auf einem Computer ausgeführt werden.

**13.** Computerprogramm nach Anspruch 12, wobei die Abfolge von Befehlen auf einem computerlesbaren Datenträger gespeichert ist.

**14.** Computerlesbarer Datenträger zur Anwendung in einer Brennkraftmaschine (10) insbesondere eines Kraftfahrzeugs, wobei auf dem Datenträger eine Abfolge von Befehlen zur Ausführung des Verfahrens nach einem der Ansprüche 1 bis 11 gespeichert ist.

**15.** Steuergerät für eine Brennkraftmaschine (10) insbesondere eines Kraftfahrzeugs, bei der Luft über eine Drosselklappe (12) einem Ansaugrohr zugeführt wird, bei der Abgas über eine Abgasrückführung (13) dem Ansaugrohr (11) zugeführt wird und dabei eine Abgastemperatur (Tagrsr) aufweist, und bei der das entstehende Gasgemisch einem Brennraum zugeführt wird und dabei eine Gasgemischtemperatur (Tasrm) aufweist, wobei die Gasgemischtemperatur (Tasrm) durch das Steuergerät in Abhängigkeit von der Abgastemperatur (Tagrsr) ermittelt wird, **dadurch gekennzeichnet, daß** bei der Ermittlung der Gasgemischtemperatur (Tasrm) die wärmespeichernden Eigenschaften der Wand des Ansaugrohrs (11) berücksichtigt werden.

**16.** Brennkraftmaschine (10) insbesondere für ein Kraftfahrzeug, bei der Luft über eine Drosselklappe (12) einem Ansaugrohr (11) zugeführt wird, bei der Abgas über eine Abgasrückführung (13) dem Ansaugrohr (11) zugeführt wird und dabei eine Abgastemperatur (Tagrsr) aufweist, und bei der das entstehende Gasgemisch einem Brennraum zugeführt wird und dabei eine Gasgemischtemperatur (Tasrm) aufweist, wobei die Gasgemischtemperatur (Tasrm) durch ein Steuergerät in Abhängigkeit von der Abgastemperatur (Tagrsr) ermittelt wird, **dadurch gekennzeichnet, daß** bei der Ermittlung der Gasgemischtemperatur (Tasrm) die wärmespeichernden Eigenschaften der Wand des Ansaugrohrs (11) berücksichtigt werden.

**17.** Computerlesbarer Datenträger zur Anwendung in dem Steuergerät nach einem der Ansprüche 14 oder 15, wobei auf dem Datenträger eine Abfolge von Befehlen gespeichert ist, die dazu geeignet sind, das Verfahren nach einem der Ansprüche 1 bis 11 durchzuführen, wenn sie auf einem Computer ausgeführt werden.

**Geänderte Patentansprüche gemäss Regel 86(2) EPÜ.**

**1.** Verfahren zum Betreiben einer Brennkraftmaschine (10) insbesondere eines Kraftfahrzeugs, bei dem Luft über eine Drosselklappe (12) einem Ansaugrohr (11) zugeführt wird, bei dem Abgas über eine Abgasrückführung (13) dem Ansaugrohr (11) zugeführt wird und dabei eine Abgastemperatur (Tagrsr) aufweist, bei dem das entstehende Gasgemisch einem Brennraum zugeführt wird und dabei eine Gasgemischtemperatur (Tasrm) aufweist, und bei dem die Gasgemischtemperatur (Tasrm) in Abhängigkeit von der Abgastemperatur (Tagrsr) ermittelt wird, **dadurch gekennzeichnet, daß** ein der Wand des Ansaugrohrs (11) zufließender Wärmestrom (Qsrwsr) berücksichtigt wird, der über das in das Ansaugrohr (11) einströmende Gasgemisch zugeführt wird, daß ein der Wand des Ansaugrohrs (11) zufließender Wärmestrom (Qmotwsr) berücksichtigt wird, der von dem Brennraum der Brennkraftmaschine (10) dem Ansaugrohr (11) zugeführt wird, daß ein von der Wand des Ansaugrohrs (11) in die Umgebung abfließender Wärmestrom (Quwsr) berücksichtigt wird, daß die beiden zufließenden Wärmeströme (Qsrwsr, Qmotwsr) addiert und davon der abfließende Wärmestrom (Quwsr) subtrahiert wird, daß aus den addierten und subtrahierten Wärmeströmen eine Wandtemperatur (Twdsr) für die Wand des Ansaugrohrs (11) durch eine Integration (33, G7) ermittelt wird, und daß bei der Ermittlung der Gasgemischtemperatur (Tasrm) die wärmespeichernden Eigenschaften der Wand des Ansaugrohrs (11) mittels der Wandtemperatur (Twdsr) berücksichtigt werden.

**2.** Verfahren nach Anspruch 1, **dadurch gekennzeichnet, daß** der der Wand des Ansaugrohrs (11) aufgrund des in das Ansaugrohr (11) einströmenden Gasgemischs zufließende Wärmestrom (Qsrwsr) in Abhängigkeit von der Gasgemischtemperatur (Tasrm) und der Wandtemperatur (Twdsr) ermittelt wird.

**3.** Verfahren nach einem der Ansprüche 1 oder 2, **dadurch gekennzeichnet, daß** der der Wand des Ansaugrohrs (11) von dem Brennraum zufließende Wärmestrom (Qmotwsr) in Abhängigkeit von der Gasgemischtemperatur (Tasrm) und einer Motortemperatur (Tmot), insbesondere einer Kühlwassertemperatur ermittelt wird.

**4.** Verfahren nach einem der Ansprüche 1 bis 3, **dadurch gekennzeichnet, daß** der von der Wand des Ansaugrohrs (11) in die Umgebung abfließende Wärmestrom (Quwsr) in Abhängigkeit von der Wandtemperatur (Twdsr) und einer Umgebungstemperatur (Tu) ermittelt wird.

**5.** Verfahren nach einem der Ansprüche 1 bis 4, **dadurch gekennzeichnet, daß** ein in das Ansaugrohr (11) aufgrund des einströmenden Gasgemisches zufließender Wärmestrom (Qinsr) berücksichtigt wird, daß von diesem Wärmestrom (Qinsr) der zu der Wand des Ansaugrohrs (11) abfließende Wärmestrom (Qsrwsr) subtrahiert wird, und daß daraus die Gasgemischtemperatur (Tasrm) ermittelt wird.

**6.** Verfahren nach Anspruch 5, **dadurch gekennzeichnet, daß** der in das Ansaugrohr (11) aufgrund des einströmenden Gasgemischs zufließende Wärmestrom (Qinsr) in Abhängigkeit von einer Lufttemperatur (Tavdkg) vor der Drosselklappe (12), der Abgastemperatur (Tagrsr) und der Gasgemischtemperatur (Tasrm) ermittelt wird.

**7.** Computerprogramm zur Anwendung in einer Brennkraftmaschine (10) insbesondere eines Kraftfahrzeugs, mit einer Abfolge von Befehlen, die dazu programmiert sind, das Verfahren nach einem der Ansprüche 1 bis 6 durchzuführen, wenn sie auf einem Computer ausgeführt werden.

**8.** Computerprogramm nach Anspruch 7, wobei die Abfolge von Befehlen auf einem computerlesbaren Datenträger gespeichert ist.

**9.** Computerlesbarer Datenträger zur Anwendung in einer Brennkraftmaschine (10) insbesondere eines Kraftfahrzeugs, wobei auf dem Datenträger eine Abfolge von Befehlen zur Ausführung des Verfahrens nach einem der Ansprüche 1 bis 6 gespeichert ist.

**10.** Steuergerät für eine Brennkraftmaschine (10) insbesondere eines Kraftfahrzeugs, das zur Anwendung in einem Verfahren nach einem der Ansprüche 1 bis 6 hergerichtet ist

**11.** Brennkraftmaschine (10) insbesondere für ein Kraftfahrzeug, mit einem Steuergerät, das zur Anwendung in einem Verfahren nach einem der Ansprüche 1 bis 6 hergerichtet ist.

**12.** Computerlesbarer Datenträger zur Anwendung in dem Steuergerät nach einem der Ansprüche 10 oder 11, wobei auf dem Datenträger eine Abfolge von Befehlen gespeichert ist, die dazu programmiert sind, das Verfahren nach einem der Ansprüche 1 bis 6 durchzuführen, wenn sie auf einem Computer ausgeführt werden.

## FIG. 1

EP 1 312 783 A1

FIG. 2

**Europäisches Patentamt**

# EUROPÄISCHER RECHERCHENBERICHT

Nummer der Anmeldung

EP 01 12 3881

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,Y | DE 197 39 901 A (BOSCH GMBH ROBERT) 18. März 1999 (1999-03-18) * Spalte 1, Zeile 29 - Zeile 59 * * Spalte 2, Zeile 39 - Spalte 4, Zeile 24 * --- | 1-17 | F02D41/14 F02D41/04 |
| Y | DE 44 44 416 A (BOSCH GMBH ROBERT) 20. Juni 1996 (1996-06-20) * Zusammenfassung * * Spalte 2, Zeile 60 - Spalte 4, Zeile 4 * --- | 1-17 | |
| A | FR 2 797 305 A (PEUGEOT CITROEN AUTOMOBILES SA) 9. Februar 2001 (2001-02-09) * Anspruch 3 * ----- | 1,15,16 | |

**RECHERCHIERTE SACHGEBIETE (Int.Cl.7)**

F02D

Der vorliegende Recherchenbericht wurde für alle Patentansprüche erstellt

| Recherchenort | Abschlußdatum der Recherche | Prüfer |
|---|---|---|
| DEN HAAG | 9. Januar 2002 | Röttger, K |

**EP 1 312 783 A1**

## ANHANG ZUM EUROPÄISCHEN RECHERCHENBERICHT
### ÜBER DIE EUROPÄISCHE PATENTANMELDUNG NR.

EP 01 12 3881

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 19739901 | A | 18-03-1999 | DE 19739901 | A1 | 18-03-1999 |
| | | | WO 9913208 | A1 | 18-03-1999 |
| | | | JP 2001504919 | T | 10-04-2001 |
| | | | US 6272427 | B1 | 07-08-2001 |
| DE 4444416 | A | 20-06-1996 | DE 4444416 | A1 | 20-06-1996 |
| | | | WO 9618811 | A1 | 20-06-1996 |
| | | | DE 59505057 | D1 | 18-03-1999 |
| | | | EP 0797730 | A1 | 01-10-1997 |
| | | | JP 10510345 | T | 06-10-1998 |
| | | | US 6035831 | A | 14-03-2000 |
| FR 2797305 | A | 09-02-2001 | FR 2797305 | A1 | 09-02-2001 |

EPO FORM P0461

Für nähere Einzelheiten zu diesem Anhang : siehe Amtsblatt des Europäischen Patentamts, Nr.12/82